# EUROPEAN PATENT SPECIFICATION

(11) **EP 2 713 116 B1**
(45) Date of publication and mention of the grant of the patent: **01.07.2015**
(21) Application number: 13185147.9
(22) Date of filing: 19.09.2013
(51) Int. Cl.: F24F 13/02, F16L 41/08, F16L 9/17

(54) **Ventilation duct**
Belüftungskanal
Conduit de ventilation

(30) Priority: 28.09.2012 IT VR20120194
(43) Date of publication of application: 02.04.2014
(73) Proprietor: Klimagiel S.r.l., 37135 Verona (IT)
(72) Inventor: Granzotto, Lanfranco, 37126 Verona (IT)
(74) Representative: Lissandrini, Marco

(56) References cited:
- WO-A1-2011/001279
- US-A- 2 703 110
- US-A- 4 009 895
- US-A- 4 294 476
- US-A- 4 569 110
- US-A- 5 393 106
- US-A- 5 518 277
- US-A1- 2010 156 049

## Description

This invention relates to a ventilation duct, that is to say, a device capable of channelling and conveying a gas, in particular, air. Such a device can be used, for example, in factory buildings, offices, public premises, private homes and other locations. The term "ventilation duct" as used in this description is extended to mean also a single tubular portion of a duct. It should also be noted that the ventilation duct is also commonly referred as "diffuser" or "channel".

In the state of the art, a ventilation duct comprises a tubular segment, usually cylindrical and made by calendering a flat metal sheet. The tubular segment may have a closed transverse cross section, that is to say, an uninterrupted side wall, or the side wall may be left open.

In the latter case, the side wall is closed at the place of installation of the ducts.

More in detail, the tubular segment has a longitudinal axis of extension. The tubular segment also a pair of ends located along the longitudinal axis of extension and opposite to each other. These ends are designed to be joined to other tubular segments in such a way as to assemble a ventilation duct of any length. For this purpose, the ventilation duct comprises a pair of flanges, each located at one end and whose purpose is to be coupled to similar flanges of other tubular segments and then connected and held in place by a collet to allow two ducts of similar cross section to be joined. Each flange is defined by an uninterrupted protrusion formed on one edge of the cylindrical segment at one of the aforesaid ends. As is known in the prior art, the flange is made by bending the edges of the metal sheet the tubular segment is made from. More specifically, the flange extends in a plane perpendicular to the longitudinal axis of extension.

In other words, the flange projects perpendicularly from the outside surface of the duct.

Disadvantageously, packaging and transporting these prior art ventilation ducts is rather problematical.

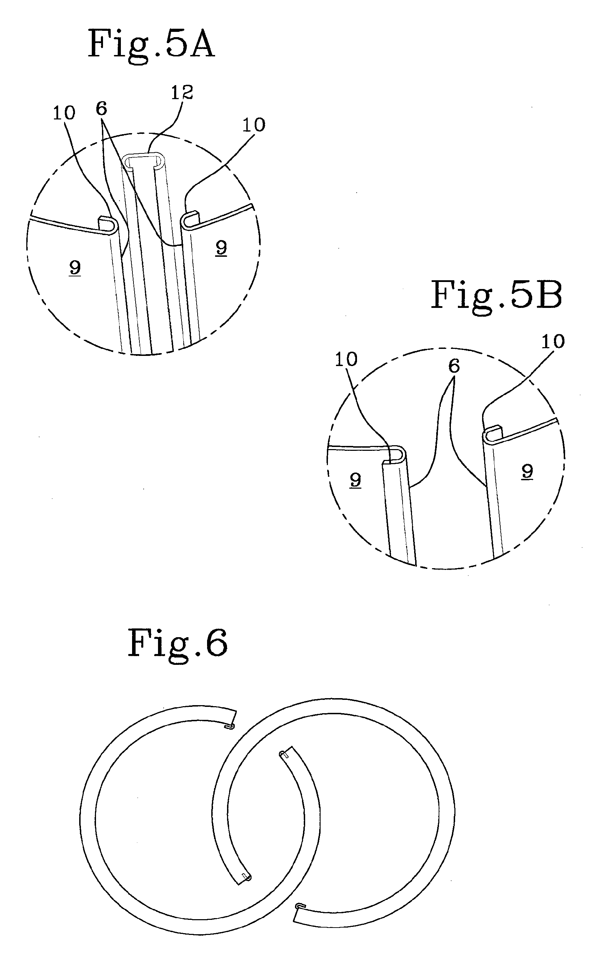

Indeed, to stack two open ducts, one open edge of each is inserted between the open edges of the other to form a configuration substantially similar in shape to an "8" (shown schematically in Figure 6). That means it is impossible to stack many ducts together. In particular, it is impossible to insert one duct into another completely because excessive widening of the edges may lead to unwanted permanent deformation of the end flanges. In addition, such deformation would also affect the outside surface of the duct.

Document WO-2011/001279-A discloses a process for manufacturing duct modules for air distribution and/or diffusion systems comprises steps of: predisposing a metal sheet having a substantially flat development; creating constraining means at least at a respective longitudinal edge of the metal sheet, opposite longitudinal edges of the metal sheet being destined to be coupled in use conditions of the module, the constraining means in particular comprising at least a reference portion destined to enable correct reciprocal positioning of the opposite longitudinal edges during a constraining step thereof, and bending the metal sheet in order to near the longitudinal edges to one another, defining a substantially tubular shape of the metal sheet; on completion of step of bending the metal sheet, the sheet being conformed, in transversal section, substantially as a spiral, with respective longitudinal edges thereof arranged at different distances from a longitudinal development of the bent sheet.

In this context, the basic technical purpose of this invention is to provide a ventilation duct which overcomes the above mentioned disadvantages of the prior art.

More specifically, the aim of the invention is to provide a ventilation duct whose storage and space efficiency is improved.

The technical purpose and aims specified are substantially achieved by a ventilation duct comprising the technical features set out in one or more of the appended claims.

Further features and advantages of the invention are more apparent in the detailed description below of a preferred, non-limiting embodiment of a ventilation duct, as illustrated in the accompanying drawings, in which:

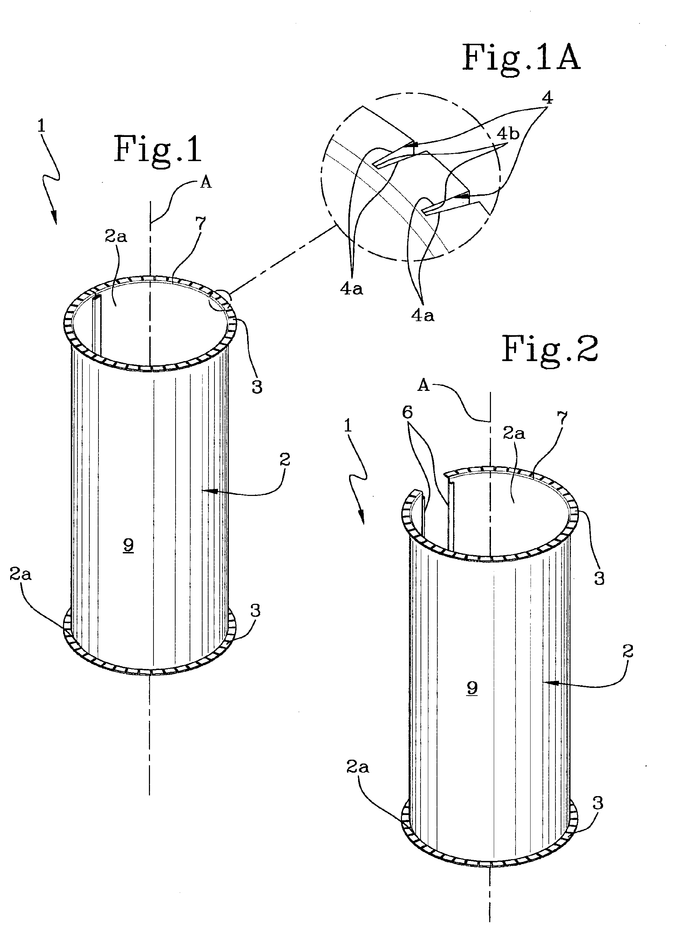

- Figure 1 is a perspective view of a ventilation duct according to the invention;
- Figure 1 a is an enlarged view of a detail of the ventilation duct of Figure 1;
- Figure 2 is a perspective view of the ventilation duct of Figure 1 in a storage configuration;
- Figure 3 is a perspective view of a number of the ventilation ducts of Figures 1 and 2 in a stack;
- Figure 4 is a perspective view of a metal sheet during production of the ventilation duct of Figures 1 and 2;
- Figures 5a and 5b are schematic views of a detail of the ventilation duct of Figures 1 and 2 in two different embodimentrs; and
- Figure 6 schematically illustrates how two ventilation ducts are stacked according to the current state of the art.

With reference to the accompanying drawings, the numeral 1 denotes a ventilation duct according to this invention.

The ventilation duct 1 comprises a tubular segment 2. The tubular segment 2 has a longitudinal axis of extension "A". The tubular segment 2 also comprises a side wall 9, preferably disposed about the longitudinal axis "A". The tubular segment 2 also has a pair of ends 2a located along the longitudinal axis of extension "A". The side wall 9 extends between the ends 2a.

More in detail, the tubular segment 2 is made by calendering a metal sheet 5, preferably rectangular in shape and having four sides 8. The tubular segment may also have one or more perforated zones (not illustrated) to allow air to flow into the tubular segment 2 from the outside and vice versa.

As shown in the accompanying drawings, the metal sheet 5 defines the side wall 9 of the tubular segment 2.

In Figure 2, the tubular segment 2 is shown open. Consequently, the tubular segment 2 has a pair of edges 6 which, during installation, are drawn near each other and joined together in such a way as to prepare the ventilation duct 1 for installation, as shown, by way of example, in Figure 1. Preferably, the edges 6 are straight and oriented parallel to the longitudinal axis of extension "A" of the tubular segment 2. In other words, the edges 6 are oriented lengthways of the tubular segment 2. More specifically, the edges 6 are opposite to each other. It should be noted that in the case of a rectangular metal sheet, the edges 6 are defined by two opposite sides 8 of the metal sheet.

More in detail, the tubular segment 2 also has a pair of opposite edges 7. The edges 7 define the ends 2a of the tubular segment 2. In the case of a rectangular metal sheet, the edges 7 are defined by the other two sides 8 of the metal sheet.

At each end 2a, and more specifically on the edges 7, there is a flange 3. The flange 3 extends away from the side wall 9 and, more specifically, from the longitudinal axis "A" of the tubular segment 2. More in detail, the flange 3 is made in one piece with the side wall 9. More specifically, the flanges 3 are made by bending two respective portions of the sheet 5 in the proximity of two opposite sides 8.

The flange 3 has at least one break 4 along a perimeter of the tubular segment 2. Preferably, the flange 3 has a plurality of breaks 4. Still more preferably, the breaks 4 are equispaced. The term "break" is used to mean a variation in the extension of the flange 3, in particular its length, measured away from the side wall 9 of the tubular segment 2.

In the embodiment described and illustrated, the breaks 4 have a triangular shape. More in detail, each break 4 has two oblique edges 4a, formed on the flange 3 and which meet at a respective vertex 4b. The vertex 4b is located at a portion of the edge 7 of the tubular segment 2. In other words, each break 4 has the shape of a "V" converging in the direction of the longitudinal axis of extension "A".

To close the edges 6, the ventilation duct 1 comprises a pair of hooks 10 fixed to the edges 6. The hooks extend substantially along the full length of the tubular segment 2 and, in particular, are positioned parallel to the longitudinal axis of extension "A".

More in detail, the hooks 10 may match each other so that they can be connected (crimped) to each other without the need for additional elements. For example, one of the two hooks 10 may be oriented towards the inside of the tubular segment 2, while the other may be positioned on the outside, as in the example shown in Figure 5b.

In a different embodiment, both of the hooks 10 may protrude towards the inside of the tubular segment 2, and are connected to each other through the agency of a connecting member 12, also referred to as bayonet. This configuration of the hooks 10 is shown in Figure 5a.

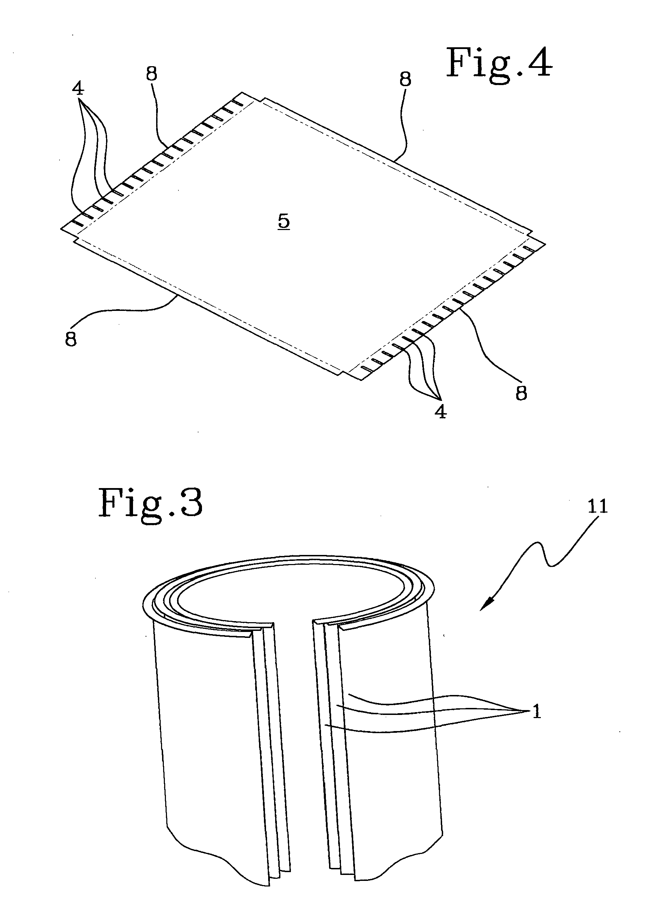

Also part of this invention is a stack 11 of a plurality of ducts 1 as described above. As shown in Figure 3, the tubular segments 2 of the ducts 1 (calendered) are inserted into each other, in particular, concentrically.

More specifically, in the stack, the edges 6 of each tubular segment 2 are the same distance from the longitudinal axis of extension "A". In other words, the edges 6 lie on an imaginary cylindrical surface formed by the lateral surface 9 and by the extension thereof through the longitudinal opening between the edges 6. That means the edges 6 are not offset from each other relative to the longitudinal axis of extension "A".

The ventilation ducts 1 are made according to the following method. Metal sheeting is unwound from a roll (not illustrated) and is divided into rectangular sheets 5 of predetermined size. Each sheet is perforated according to operating requirements in such a way as to form passage openings for air diffusion.

Two opposite sides 8 of the sheet 5 are then cut to form the breaks 4 described above. The sides 8 are then bent to define the flanges 3.

In a subsequent step, the remaining sides 8 of the sheet 5 are bent onto themselves to define the hooks 10 in one of the ways described above. The sheet 5 is then calendered in such a way as to define the tubular segment 2.

The ducts 1 are then packed, in particular defining a stack 11, and transported to the place of installation. Here, the ducts 1 are closed along the side wall 9 making use of the hooks 10, with or without the connecting member 12. Next, the ducts are laid in place and connected to each other using suitable collets, which are not illustrated because they are of a type known in the state of the art.

Also part of this invention is a method of stacking the ventilation ducts 1 More specifically, the two edges 6 of the tubular segment 1 are moved apart. Another ventilation duct 1 is then inserted, preferably through the ends 2a of the tubular segment 2. Alternatively, a stack 11 may be inserted into the tubular segment 2. Consequently, these operations may be repeated as often as necessary to make up a stack 11 comprising all the ventilation ducts 1 to be stored.

The invention achieves the preset aim. In effect, the breaks formed on the flange allow the edges of the tubular segment to be spread apart without deforming the flange. That means numerous ducts can be stacked in little more than the space required by a single duct because the ducts can be inserted fully into each other.

## Claims

1. A ventilation duct (1) comprising a tubular segment (2) having a longitudinal axis of extension (A) and a pair of ends (2a) located along the longitudinal axis of extension (A), said tubular segment (2) being longitudinally opened and having two edges (6) adapted to be drawn near each other and to be joined together during an installation of the duct; a pair of flanges (3) each located at a respective end (2a) and extending transversely to the longitudinal axis of extension (A), each flange (3) having a plurality of breaks (4) along a perimeter of the tubular segment (2), **characterized in that** each break (4) is in the shape of a "V" converging in the direction of the longitudinal axis of extension (A), whereby each break (4) is suitable for opening wide said edges (6) without warping said flanges (3), in such a way as to insert one duct (1) into another.

2. The ventilation duct (1) according to claim 1, **characterized in that** the breaks (4) are equispaced.

3. The ventilation duct (1) according to claim 1, **characterized in that** a vertex (4b) of the break (4) is positioned at a border portion of the tubular segment (2).

4. A stack (11) of a plurality of ducts (1) according to any of the preceding claims, **characterized in that** the tubular segments (2) of the ducts (1) are inserted into one another, in particular in substantially concentric manner.

5. A method for making ventilation ducts (1) according to any of the claims from 1 to 3, **characterized in that** it comprises the steps of shaping a metal sheet (5) at two opposite sides (8) to form the breaks (4); bending the sheet (5) at the two opposite sides (8) to form the flanges (3); calendering the sheet (5) to form the tubular segment (2).

6. The method according to claim 5, **characterized in that** it comprises a step of transporting the ventilation duct (1) to a place of installation; joining two edges (6) of the tubular segment (2) to close it along a side wall (9).

7. A method for stacking ventilation ducts (1) according to any of the claims from 1 to 3, **characterized in that** it comprises the steps of moving the two edges (6) of the tubular segment (2) apart; inserting a further ventilation duct (1) or a stack (11) according to claim 5 into the tubular segment (2).

8. The method according to the preceding claim, **characterized in that** the steps of moving the edges (6) apart and inserting the further duct (1) or the stack (11) are repeatable.

## Patentansprüche

1. Belüftungskanal (1), umfassend ein Rohrsegment (2), aufweisend eine Längsausdehnungsachse (A) und ein Paar Enden (2a), befindlich entlang der Längsausdehnungsachse (A), wobei das Rohrsegment (2) längs geöffnet ist und zwei Kanten (6) aufweist, ausgelegt, um während einer Installation des Kanals aneinander angenähert und miteinander verbunden zu werden, ein Paar Flansche (3), von denen ein jeder an einem jeweiligen Ende (2a) befindlich ist und sich quer zur Längsausdehnungsachse (A) erstreckt, wobei ein jeder Flansch (3) eine Vielzahl an Durchbrüchen (4) entlang eines Umfangs des Rohrsegments (2) aufweist, **dadurch gekennzeichnet, dass** jeder Durchbruch (4) eine V-Form aufweist, zusammenlaufend in die Richtung der Längsausdehnungsachse (A), wobei ein jeder Durchbruch (4) geeignet ist, um die Kanten (6) weit zu öffnen, ohne die Flansche (3) zu verziehen, sodass ein Kanal (1) in einen anderen eingefügt werden kann.

2. Belüftungskanal (1) nach Anspruch 1, **dadurch gekennzeichnet, dass** die Durchbrüche (4) gleich beabstandet sind.

3. Belüftungskanal (1) nach Anspruch 1, **dadurch gekennzeichnet**, das ein Vertex (4b) des Durchbruchs (4) an einem Randabschnitt des Rohrsegments (2) positioniert ist.

4. Paket (11) einer Vielzahl an Kanälen (1) nach einem der vorhergehenden Ansprüche, **dadurch gekennzeichnet, dass** die Rohrsegmente (2) der Kanäle (1) ineinander eingefügt sind, insbesondere im Wesentlichen auf konzentrische Weise.

5. Verfahren zur Herstellung von Belüftungskanälen (1) nach einem der Ansprüche 1 bis 3, **dadurch gekennzeichnet, dass** es die Schritte zum Ausgestalten eines Metallblechs (5) an zwei entgegengesetzten Seiten (8), um die Durchbrüche (4) zu formen, zum Biegen (5) des Blechs an den zwei entgegengesetzten Seiten (8), um die Flansche (3) zu formen, zum Kalandrieren des Blechs (5), um das Rohrsegment (2) zu formen, umfasst.

6. Verfahren nach Anspruch 5, **dadurch gekennzeichnet, dass** es einen Schritt zum Transportieren des Belüftungskanals (1) an einen Installationsort, zum Verbinden zweier Kanten (6) des Rohrsegments (2), um dieses entlang einer Seitenwand (9) zu verschließen, umfasst.

7. Verfahren zur Paketbildung von Belüftungskanälen (1) nach einem der Ansprüche 1 bis 3, **dadurch gekennzeichnet, dass** es die Schritte zum Bewegen der zwei Kanten (6) des Rohrsegments (2) wegführend voneinander, zum Einfügen eines weiteren Belüftungskanals (1) oder eines Pakets (11) nach Anspruch 5 in das Rohrsegment umfasst.

8. Verfahren nach dem vorhergehenden Anspruch, **dadurch gekennzeichnet, dass** die Schritte zum Bewegen der Kanten (6) wegführend voneinander und zum Einfügen des weiteren Kanals (1) oder Pakets (11) wiederholbar sind.

## Revendications

1. Conduit de ventilation (1) comprenant un segment tubulaire (2) présentant un axe longitudinal de développement (A) et une paire d'extrémités (2a) situées le long de l'axe longitudinal de développement (A), ledit segment tubulaire (2) étant longitudinalement ouvert et ayant deux bords (6) adaptés pour se rapprocher l'un de l'autre et pour se rejoindre pendant une installation du conduit ; une paire de brides (3) situées chacune à une extrémité respective (2a) et se développant transversalement à l'axe longitudinal de développement (A), chaque bride (3) présentant une pluralité de fissures (4) le long d'un périmètre du segment tubulaire (2), **caractérisé en ce que** chaque fissure (4) a la forme d'un « V » convergeant dans la direction de l'axe longitudinal de développement (A), dans lequel chaque fissure (4) est en mesure d'ouvrir largement lesdits bords (6) sans déformer lesdites brides (3), de sorte à emboîter un conduit (1) dans l'autre.

2. Conduit de ventilation (1) selon la revendication 1, **caractérisé en ce que** les fissures (4) sont équidistantes.

3. Conduit de ventilation (1) selon la revendication 1, **caractérisé en ce qu'**un sommet (4b) de la fissure (4) est positionné à une partie de bordure du segment tubulaire (2).

4. Pile (11) comprenant une pluralité de conduits (1) selon l'une quelconque des revendications précédentes, **caractérisée en ce que** les segments tubulaires (2) des conduits (1) sont emboîtés l'un dans l'autre, notamment de façon essentiellement concentrique.

5. Procédé de fabrication pour conduits de ventilation (1) selon l'une quelconque des revendications 1 à 3, **caractérisé en ce qu'**il comprend les étapes de façonner une tôle métallique (5) à deux côtés opposés (8) pour former les fissures (4) ; de cintrer la tôle (5) aux deux côtés opposés (8) pour former les brides (3) ; de calandrer la tôle (5) pour former le segment tubulaire (2).

6. Procédé selon la revendication 5, **caractérisé en ce qu'**il comprend une étape de transporter le conduit de ventilation (1) à une place d'installation ; de rejoindre deux bords (6) du segment tubulaire (2) pour le fermer le long d'une paroi latérale (9).

7. Procédé d'empilement pour conduits de ventilation (1) selon l'une quelconque des revendications 1 à 3, **caractérisé en ce qu'**il comprend les étapes d'éloigner les deux bords (6) du segment tubulaire (2) ; d'emboîter un conduit de ventilation supplémentaire (1) ou une pile (11) selon la revendication 5 dans le segment tubulaire (2).

8. Procédé selon la revendication précédente, **caractérisé en ce que** les étapes d'éloigner les bords (6) et d'emboîter le conduit supplémentaire (1) ou la pile (11) sont répétables.
